# EUROPEAN PATENT SPECIFICATION

(11) **EP 3 879 711 B1**
(45) Date of publication and mention of the grant of the patent: **07.08.2024**
(21) Application number: 18939696.3
(22) Date of filing: 07.11.2018
(51) Int. Cl.: H04B 1/38, H04M 1/02, H04M 1/21

(54) **PORTABLE ELECTRONIC DEVICE AND METHOD FOR CONTROLLING PORTABLE ELECTRONIC DEVICE**
TRAGBARE ELEKTRONISCHE VORRICHTUNG UND VERFAHREN ZUR STEUERUNG EINER TRAGBAREN ELEKTRONISCHEN VORRICHTUNG
DISPOSITIF ÉLECTRONIQUE PORTABLE ET PROCÉDÉ DE COMMANDE DE CE DISPOSITIF

(43) Date of publication of application: 15.09.2021
(73) Proprietor: Sony Group Corporation, Tokyo 108-0075 (JP)
(72) Inventor: KATO, Koichi, Tokyo 140-0002 (JP)
(74) Representative: D Young & Co LLP
(86) International application number: PCT/JP2018/041361
(87) International publication number: WO 2020/095387

(56) References cited:
- EP-A1- 1 742 447
- EP-A1- 3 373 562
- WO-A1-2006/106374
- WO-A1-2007/078256
- CN-U- 205 545 424
- GB-A- 2 350 516
- JP-A- 2002 125 019
- JP-A- 2011 147 140

## Description

### Field

The present invention relates to a portable electronic device and a method of controlling the portable electronic device.

### Background

A type of portable electronic device has a housing the structure of which partially changes during use.

For example, the technology described in Patent Literature 1 relates to a smartphone with a camera configured to partially project from the top of the housing.

### Citation List

### Patent Literature

Patent Literature 1: United States Patent No. 9736383
Other prior art is described in WO2007078256A, JP2002-125019, WO2006106374, JP2011147140, EP1742447 and EP3373562.

### Summary

### Technical Problem

In the technology of Patent Literature 1, however, the movable portion of the housing is small. The technology therefore needs to be further improved to enhance user experience of a user during use of a portable electronic device.

Motivated by this, the present disclosure aims to provide novel and improved portable electronic device and method of controlling the portable electronic device that are capable of further enhancing user experience of a user during use of the portable electronic device.

### Solution to Problem

According to the present disclosure, a portable electronic device according to claim 1 is provided.

### Brief Description of the Drawings

FIG. 1A is a front view of a portable electronic device according to a first embodiment of the present disclosure to illustrate an example appearance of the portable electronic device.
FIG. 1B is a drawing that illustrates example operation of the portable electronic device according to the embodiment.
FIG. 1C is a drawing that illustrates other example operation of the portable electronic device according to the embodiment.
FIG. 2 is a block diagram that illustrates an example functional configuration of the portable electronic device according to the embodiment.
FIG. 3 is an exploded perspective view of the portable electronic device according to the embodiment to illustrate an example housing structure.
FIG. 4 is a partial enlarged view of the portable electronic device according to the embodiment to illustrate a distance by which a projection portion of the portable electronic device projects.
FIG. 5 is a flowchart that illustrates example operation of the portable electronic device according to the embodiment.
FIG. 6 is a drawing that illustrates an example function of the portable electronic device according to the embodiment.
FIG. 7A is a front view of the portable electronic device according to the embodiment to illustrate a first modification of the portable electronic device according to the embodiment.
FIG. 7B is a front view of the portable electronic device according to the first modification to illustrate an example state of use.
FIG. 8A is a front view of the portable electronic device according to the embodiment to illustrate a different modification of the portable electronic device, not according to the invention.
FIG. 8B is a front view of the portable electronic device according to the different modification to illustrate an example state of use, not according to the invention.
FIG. 9 is a block diagram that illustrates an example hardware configuration of the portable electronic device according to the embodiment.

### Description of Embodiments

Preferred embodiments of the present disclosure will now be described in detail with reference to the accompanying drawings. In this specification and the drawings, components having substantially the same functional configuration are indicated by the same reference numerals, and description thereof will be omitted.

The explanation will be given in the following order.
1. First embodiment (housing structure configured to project)
   1.1. Appearance of portable electronic device and example operation thereof
   1.2. Example functional configuration of portable electronic device
   1.3. Example structure of portable electronic device
   1.4. Method of control
   1.5. Example functions (Use case 1: function of playing video and music)
   1.6. First modification (Use case 2: function as camera)
   1.7. Second modification (Use case 3: function of phone calls)
2. Example hardware configuration
3. Conclusions

### 1. First embodiment

### 1.1. Appearance of portable electronic device and example operation thereof

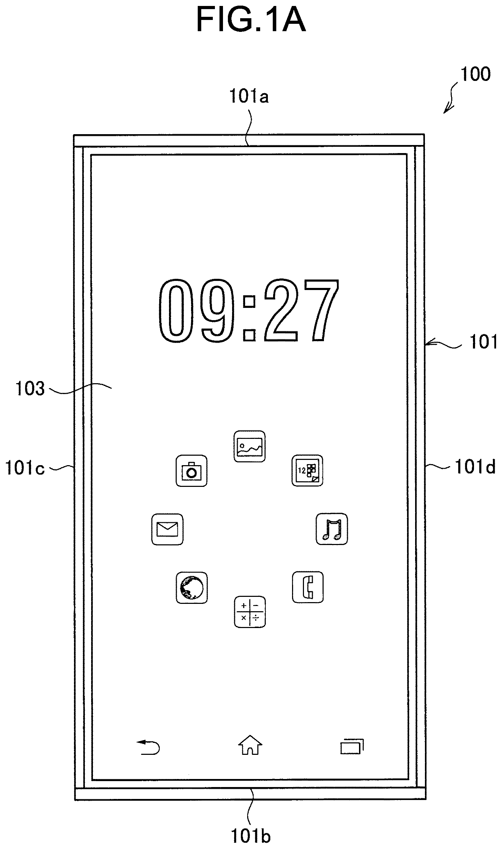

An example appearance of a portable electronic device 100 according a first embodiment of the present disclosure will now be described with reference to FIG. 1A. FIG. 1A is a front view of the portable electronic device 100 according to the first embodiment of the present disclosure to illustrate an example appearance thereof. The portable electronic device 100 according to the embodiment is a portable electronic device capable of various types of arithmetic processing. Examples of the functions of the portable electronic device 100 include establishing external communication, playing video or music, and imaging. Examples of the portable electronic device 100 include smartphones, tablet computers, and portable music players.

The portable electronic device 100 includes a housing 101. The housing 101 is a hollow box-shaped member serving as an outer shell of the portable electronic device 100. The housing 101 accommodates therein electronic circuits, a battery, a driving mechanism, and other components necessary for the portable electronic device 100 to operate. The housing 101 is, for example, a flat and substantially rectangular cuboid. Any surface of the housing 101 has a screen 103 as a display.

The housing 101 has a top end surface 101a, a bottom end surface 101b, a left end surface 101c, and a right end surface 101d, at the outer edge of the housing 101. As the housing 101 is exemplarily a flat and substantially rectangular cuboid, the top end surface 101a and the bottom end surface 101b correspond to an end surface and the other end surface of the housing 101 in the longitudinal direction.

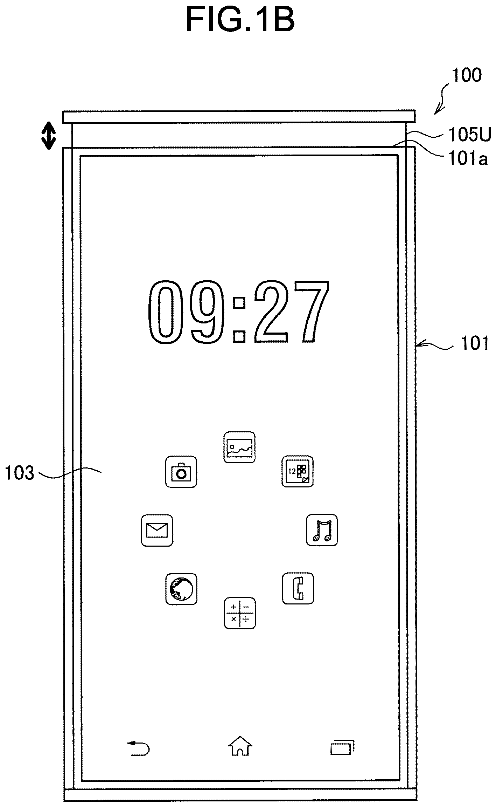

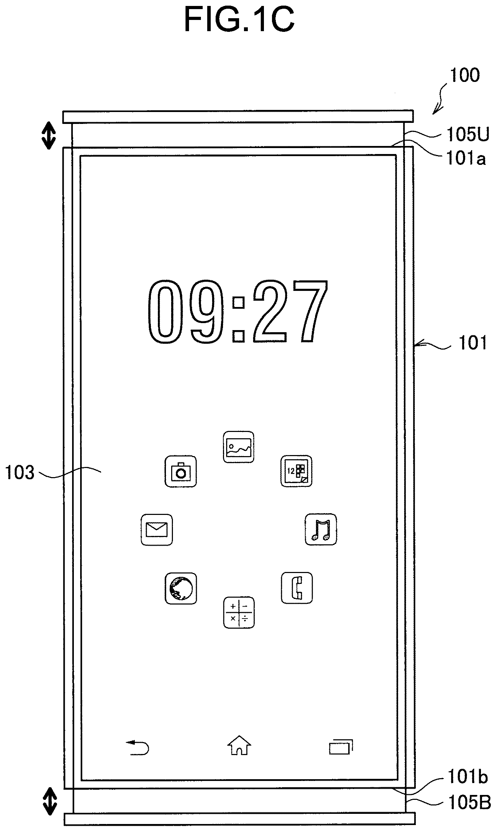

Example operation of the portable electronic device 100 according to the embodiment will now be described with reference to FIG. 1B and FIG. 1C. FIG. 1B illustrates example operation of the portable electronic device 100 according to the embodiment. FIG. 1C illustrates other example operation of the portable electronic device 100 according to the embodiment.

As illustrated in FIG. 1B, the portable electronic device 100 has a top projection portion 105U. The top projection portion 105U is a portion configured to be accommodated in the housing 101 and to project from the top end surface 101a of the housing 101. As illustrated in FIG. 1C, the portable electronic device 100 has a bottom projection portion 105B. The bottom projection portion 105B is a portion configured to be accommodated in the housing 101 and to project from the bottom end surface 101b of the housing 101. In the following description, the top projection portion 105U and the bottom projection portion 105B may be simply referred to as "projection portion".

The portable electronic device 100 may have either the top projection portion 105U or the bottom projection portion 105B configured to project from the housing 101, as illustrated in FIG. 1B, or may have both the top projection portion 105U and the bottom projection portion 105B configured to project from the housing 101 as illustrated in FIG. 1C. The top projection portion 105U and the bottom projection portion 105B project from the housing 101 in the directions opposite to each other. The shape of the housing 101 significantly changes with the projection portion projecting from the housing 101, which will be described later in detail. Such changes in the shape entertain the user of the portable electronic device 100, and user experience is therefore greatly enhanced.

### 1.2. Example functional configuration of portable electronic device

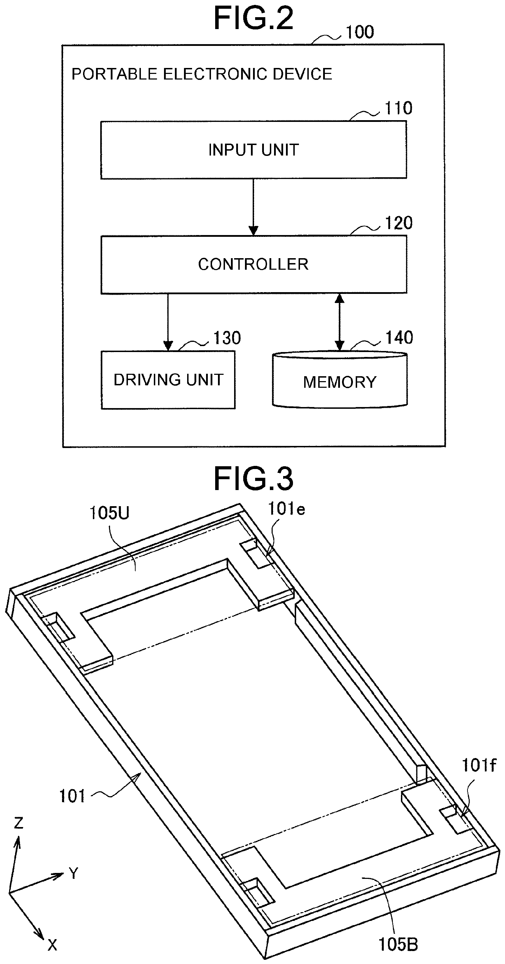

An example functional configuration of the portable electronic device 100 according to the embodiment will now be described with reference to FIG. 2. FIG. 2 is a block diagram that illustrates an example functional configuration of the portable electronic device 100 according to the embodiment. The portable electronic device 100 includes a controller 120. The portable electronic device 100 may further include an input unit 110, a driving unit 130, and a memory 140.

### (1) Input unit 110

The input unit 110 has a function to output, for example, information input from the user to the controller 120. The information input from the user may be, for example, one of functions of the portable electronic device 100 selected by the user. Other than the user-input information, the input unit 110 outputs information relating to the presence or absence of an incoming call from an outside party, data reception including e-mails, and the like, to the controller 120.

### (2) Controller 120

The controller 120 has a function to integrally control the portable electronic device 100. The controller 120 acquires information input to the input unit 110. The controller 120 further controls the manner of projection in which the top projection portion 105U and the bottom projection portion 105B project. Specifically, the controller 120 determines the state of use of the portable electronic device 100 and controls the manner of projection of the top projection portion 105U and the bottom projection portion 105B based on the result of determination. The state of use includes, for example, a state in which a function of the portable electronic device 100 is being performed in response to selection of the function by the user, and a state in which a function of the portable electronic device 100 is being performed in response to an external factor such as an incoming call from an outside party. The manner of projection includes, the distance by which the projection portion projects from the housing 101, the speed at which the projection portion projects from the housing 101, and the angle of the projection portion, already in the state of projection from the housing 101, with respect to the housing 101. The controller 120 controls the driving unit 130 to start.

### (3) Driving unit 130

The driving unit 130 drives the top projection portion 105U or the bottom projection portion 105B to project from the housing 101. The driving unit 130 further drives the top projection portion 105U or the bottom projection portion 105B in the state of projection to be accommodated in the housing 101.

### (4) Memory 140

The memory 140 stores a control program for the controller 120 to control the driving unit 130. The memory 140 may further stores, for example, data output during processing of the controller 120, computer programs and data of various applications and the like. An example functional configuration of the portable electronic device 100 according to the embodiment has been described.

### 1.3. Example structure of portable electronic device

A housing structure of the portable electronic device 100 according to the embodiment will now be described with reference to FIG. 3. FIG. 3 is an exploded perspective view of the portable electronic device 100 according to the embodiment to illustrate an example housing structure thereof. As illustrated in FIG. 3, the top projection portion 105U and the bottom projection portion 105B are configured to be accommodated in a first end 101e and a second end 101f of the housing 101, respectively.

The top projection portion 105U and the bottom projection portion 105B may have the same width (the length in the Y direction in FIG. 3) as the width (the length in the Y direction in FIG. 3) of the housing 101. The top projection portion 105U and the bottom projection portion 105B may project from the respective entire widths of the top end surface 101a and the bottom end surface 101b of the housing 101. The shape of the housing 101 significantly changes by having such comparatively large portions, the top projection portion 105U and the bottom projection portion 105B, projecting from the housing 101. Such a shape change can greatly entertain the user during use of the portable electronic device 100, and user experience is therefore further enhanced.

As described above, the housing 101 accommodates therein devices, such as electronic circuits (not illustrated). The housing 101 further accommodates therein a driving mechanism (not illustrated) for driving the top projection portion 105U and the bottom projection portion 105B to project. As an example of the driving mechanism, a pair of stepper motors may be provided at the ends of the housing 101 in the width direction (the Y direction in FIG. 3). In this case, the pair of stepper motors is provided to each of the top projection portion 105U and the bottom projection portion 105B to drive the top projection portion 105U and the bottom projection portion 105B to project. The pair of stepper motors transmits driving force to the ends of the projection portion, the top projection portion 105U or the bottom projection portion 105B, in the width direction, through a shaft, whereby the projection portion is forced to project from the housing 101 or to be accommodated in the housing 101.

A single stepper motor may be provided to each of the top projection portion 105U and the bottom projection portion 105B. In this case, the stepper motor is provided at the center of the housing 101 in the width direction (the Y direction in FIG. 3). A stepper motor may be provided inside the housing 101 to drive both the top projection portion 105U and the bottom projection portion 105B. The driving mechanism according to the present disclosure is not limited to stepper motors, and may be implemented as any element that is capable of driving the projection portions. For example, the driving mechanism according to the present disclosure may be an ultrasonic motor.

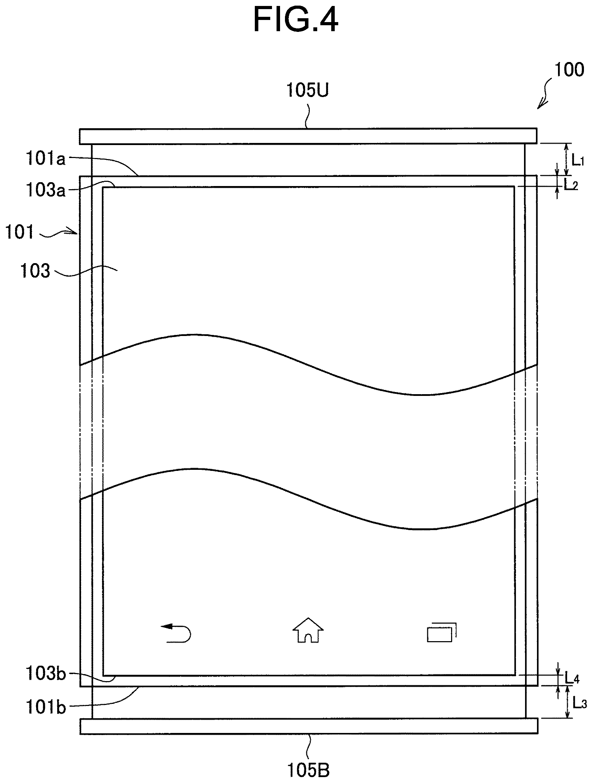

The distance, or the projection distance, by which the projection portion of the portable electronic device 100 according to the embodiment projects will now be described with reference to FIG. 4. FIG. 4 is a partial enlarged view of the portable electronic device 100 according to the embodiment to illustrate the projection distance of the projection portion. As illustrated in FIG. 4, a distance L₁ by which the top projection portion 105U projects from the housing 101 is equal to or greater than a distance L₂ from the outer edge of the top end surface 101a of the housing 101 to an edge 103a, of the screen 103, closer to the top end surface 101a.

A distance L₃ by which the bottom projection portion 105B projects from the housing 101 is equal to or greater than a distance L₄ from the outer edge of the bottom end surface 101b of the housing 101 to an edge 103b, of the screen 103, closer to the bottom end surface 101b.

The above structure allows a reduction in the distance between the edge of the screen 103 and the end surface of the housing 101 and allows an increase in the size of the screen 103 mounted on the housing 101 in comparison with a housing in the same size. Although the distance between the edge of the screen 103 and the end surface of the housing 101 is small, devices and components that are usually assembled to the screen 103 or the housing 101 can be placed in a space created for the projection portion to project. Since the projection distance of the projection portion is equal to or greater than the distance between the edge of the screen 103 and the end surface of the housing 101, a sufficient space for the devices and components is created in the projection portion. In the portable electronic device 100, although the area of the housing 101 that is occupied by the screen 103 increases, the portable electronic device 100 can have various functions with the devices and components placed in the projection portion.

With regards to the projection distance of the projection portion from the housing 101, the definition of the projection distance includes, what is called, a bezel-less structure in which the outer edge of the end surface of the housing 101 is consistent with the edge of the screen 103. For example, the distance L₂ between the outer edge of the top end surface 101a of the housing 101 and the edge 103a, of the screen 103, closer to the top end surface 101a may be equal to zero, which means that the outer edge of the top end surface 101a of the housing 101 is consistent with the edge 103a of the screen 103 closer to the top end surface 101a. Likewise, the distance L₃ between the outer edge of the bottom end surface 101b of the housing 101 and the edge 103b, of the screen 103, closer to the bottom end surface 101b may be equal to zero, which means that the outer edge of the bottom end surface 101b of the housing 101 is consistent with the edge 103b of the screen 103 closer to the bottom end surface 101b. The housing structure of the portable electronic device 100 according to the embodiment has been described.

### 1.4. Method of control

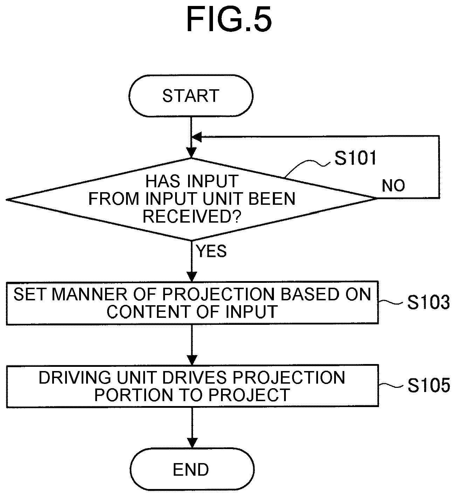

A flowchart illustrating example operation of the portable electronic device 100 according to the embodiment will now be described with reference to FIG. 5. FIG. 5 is a flowchart that illustrates example operation of the portable electronic device 100 according to the embodiment. As illustrated in FIG. 5, the controller 120 determines whether the input unit 110 receives an input to select a function or the like from the user, at Step S101. Upon determination that the input unit 110 has received an input, the process proceeds to the next step S103. Upon determination that the input unit 110 has received no inputs, the controller 120 repeats the determination process at Step S101.

At Step S103, the controller 120 determines the state of use of the portable electronic device 100, based on the content of the input or the like to the input unit 110, and sets the manner of projection of the top projection portion 105U or the bottom projection portion 105B. For example, the controller 120 sets the projection distance of the top projection portion 105U or the bottom projection portion 105B from the housing 101.

Based on the manner of projection set at Step S103, the controller 120 starts the driving unit 130. The driving unit 130 drives the top projection portion 105U or the bottom projection portion 105B to project from the housing 101 by a predetermined distance (S105). The operation of the portable electronic device 100 according to the embodiment then ends. The flowchart illustrating example operation of the portable electronic device 100 according to the embodiment has been described.

### 1.5. Example functions (Use case 1: function of playing video and music)

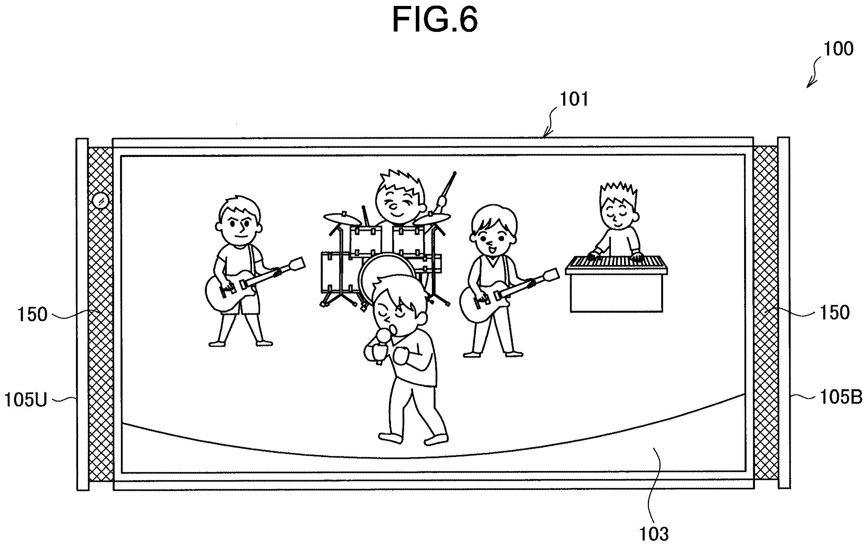

An example function of the portable electronic device 100 according to the embodiment will now be described with reference to FIG. 6. The portable electronic device 100 in the embodiment has a function to play music or video and has a speaker 150 mounted on the projection portion. FIG. 6 is a drawing illustrating an example state of use of the portable electronic device 100 according to the embodiment.

As illustrated in FIG. 6, the top projection portion 105U and the bottom projection portion 105B of the portable electronic device 100 have speakers 150. The speakers 150 output audio with the top projection portion 105U and the bottom projection portion 105B projecting from the housing 101. The speaker 150 may output audio in synchronization with the video or the like displayed on the screen 103.

In this manner, the shape of the housing 101 changes, and the speaker 150 pops out, during use of the portable electronic device 100. This operation can further enhance user experience. Since the speakers 150 are mounted on the top projection portion 105U and the bottom projection portion 105B, there is no necessity of forming specific apertures for outputting audio on the housing 101. This structure allows an increase in the size of the screen 103, and viewability of the screen 103 is therefore improved.

The speakers 150 mounted on the top projection portion 105U and the bottom projection portion 105B are open in the same direction. In the structure having the screen 103 mounted on the housing 101, the speaker 150 may be open in the same direction as the direction in which the screen 103 on the housing 101 faces.

This structure can increase the directivity of audio output from the speaker 150. Furthermore, this structure allows audio in synchronization with the video or the like displayed on the screen 103 to be output toward the user viewing the screen 103.

Since the housing 101 is exemplarily a flat and substantially rectangular cuboid, the speakers 150 mounted on the top projection portion 105U and the bottom projection portion 105B project, respectively, from the top end surface 101a and the bottom end surface 101b of the housing 101 in the longitudinal direction. The top end surface 101a and the bottom end surface 101b correspond to an end surface and the other end surface of the housing 101 in the longitudinal direction. This structure ensures a sufficient distance between the speaker 150 on the top projection portion 105U and the speaker 150 on the bottom projection portion 105B. The pair of speakers 150 are disposed away from each other by a certain distance can make the audio output from the speakers 150 more realistic.

In the structure having the screen 103 mounted on the housing 101, the manner of projection of the top projection portion 105U and the bottom projection portion 105B may be controlled in synchronization with the video or the like displayed on the screen 103. For example, the projection distances of the top projection portion 105U and the bottom projection portion 105B from the housing 101 may change with a move of an audio source in the video or the like displayed on the screen 103. More specifically, when the audio source (such as a person and an object) in the video on the screen 103 moves to the right of the screen 103, the projection distance of a projection portion on the right of the screen 103 is accordingly increased.

The angles of the top projection portion 105U and the bottom projection portion 105B, already in the state of projection from the housing 101, may change with respect to the housing 101. More specifically, the top projection portion 105U and the bottom projection portion 105B in the state of projection turn around a rotation axis along the width direction (the Y direction in FIG. 3), which changes the angles thereof with respect to the housing 101. For example, when the audio source in the video displayed on the screen 103 moves in the depth direction (the front-to-back direction) of the screen 103, the angle of the projection portion to the housing 101 changes with a move of the audio source.

Such changes in the projection distance of the projection portion from the housing 101 and in the angle of the projection portion to the housing 101 can make the audio output from the speaker 150 more realistic.

In the portable electronic device 100 according to the embodiment, when a 3D audio technology is used for the audio from the speaker 150, the 3D audio effects can be further enhanced by controlling the projection distance and the angle of the top projection portion 105U or the bottom projection portion 105B.

The top projection portion 105U and the bottom projection portion 105B in the state of projection from the housing 101 may move in synchronization with the video or the like displayed on the screen 103 or with the audio output from the speaker 150. The projection portion moves in synchronization with the video or the like displayed on the screen 103 by changing the distance from the housing 101, the speed of move, and the angle with respect to the housing 101. This operation can further enhance user experience of the user playing music, video, or the like, on the portable electronic device 100.

The speaker 150 may have a speaker box 151. Use of the speaker box 151 can further increase the quality of audio output from the speaker 150. The speaker box 151 may be mounted on the top projection portion 105U or the bottom projection portion 105B along the entire width (the Y direction in FIG. 3) thereof. The speaker box 151 having a sufficient volume is therefore obtained, and the speaker 150 can output higher quality audio. The volume of the speaker box 151 is allowed to be equal to or greater than 1 CC.

In the portable electronic device 100 according to the embodiment, the manner of projection of the projection portion may be controlled when the portable electronic device 100 outputs sound other than music and video. For example, if the portable electronic device 100 has a communication function, the speaker 150 may output ringtones for incoming calls and e-mails. In this case, since the sound has no necessity of being as realistic as music and video, neither the top projection portion 105U nor the bottom projection portion 105B, or either the top projection portion 105U or the bottom projection portion 105B may project from the housing 101.

### 1.6. First modification (Use case 2: function as camera)

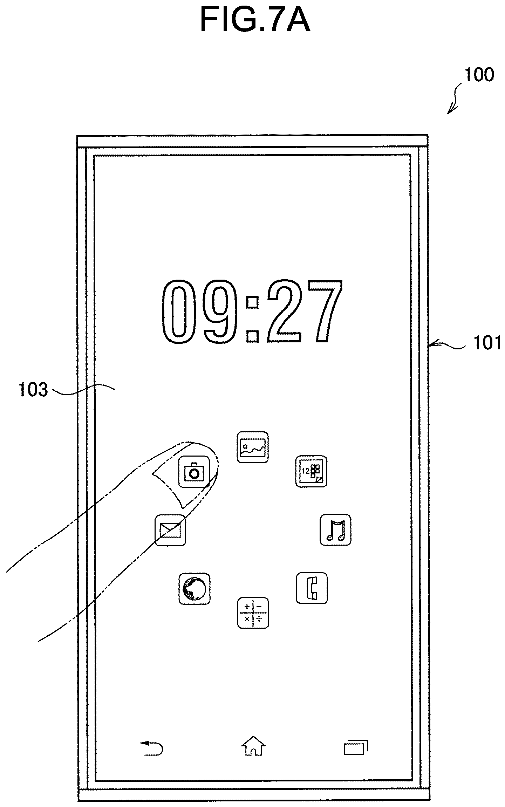

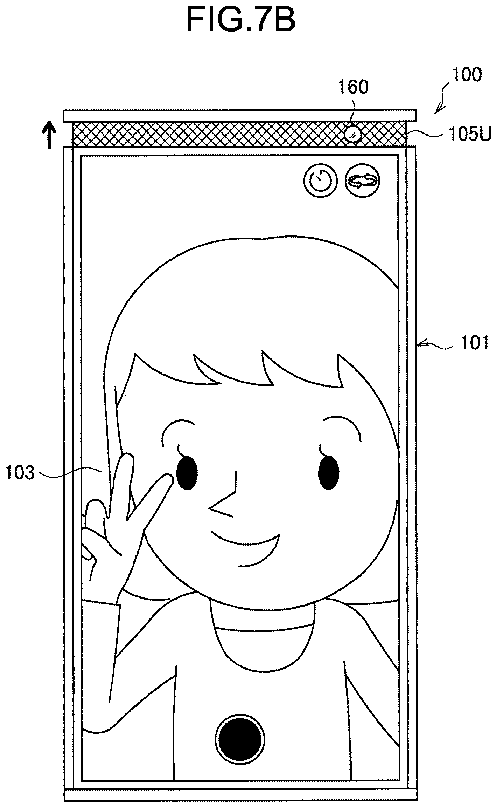

A first modification of the portable electronic device 100 according to the embodiment will now be described with reference to FIG. 7A and FIG. 7B. In the first modification, the portable electronic device 100 has a function of imaging and has a camera 160 mounted on the projection portion. FIG. 7A is a front view of the portable electronic device 100 according to the embodiment to illustrate a modification thereof. FIG. 7B is a front view of the portable electronic device 100 according to the first modification to illustrate an example state of use of the portable electronic device 100.

As illustrated in FIG. 7A, when the user of the portable electronic device 100 takes a picture or a video of a view on a side of the housing 101 having the screen 103 (in front of the housing 101), a front-side imaging function is selected. Specifically, the user selects an icon on the screen 103 that represents the front-side imaging function.

When the user selects the front-side imaging function, the top projection portion 105U projects from the housing 101, as illustrated in FIG. 7B. The top projection portion 105U has the camera 160 as an imaging device. The camera 160 on the top projection portion 105U is directed in a direction allowing for imaging the view on the front side. When the user presses a shutter button displayed on the screen 103 or another place, the camera 160 takes a picture or a video.

In this manner, the shape of the housing 101 changes and the camera 160 pops out during use of the portable electronic device 100. This operation can further enhance user experience. Since the camera 160 is mounted on the top projection portion 105U, the housing 101 has no necessity of having a certain portion for the camera 160, such as an aperture and a notch. This structure allows a further increase in the size of the screen 103 on the housing 101, and viewability of the screen 103 is accordingly improved.

The camera 160 may be mounted on the bottom projection portion 105B. A plurality of cameras 160 may be mounted on the top projection portion 105U or the bottom projection portion 105B. For example, two cameras 160 may be mounted on the top projection portion 105U or the bottom projection portion 105B to image views in front of the housing 101 and behind the housing 101.

In the first modification, the front-side imaging function may be selected after a back-side imaging function is activated. In this case, when the user selects the imaging function of the portable electronic device 100, a camera at the back of the housing 101 is activated to image a view behind the housing 101. The user then selects the front-side imaging function button displayed on the screen 103. In response to this, the projection portion projects, and the camera 160 mounted on the projection portion is activated to image a view in front of the device.

### 1.7. Second modification (Use case 3: function of phone calls)

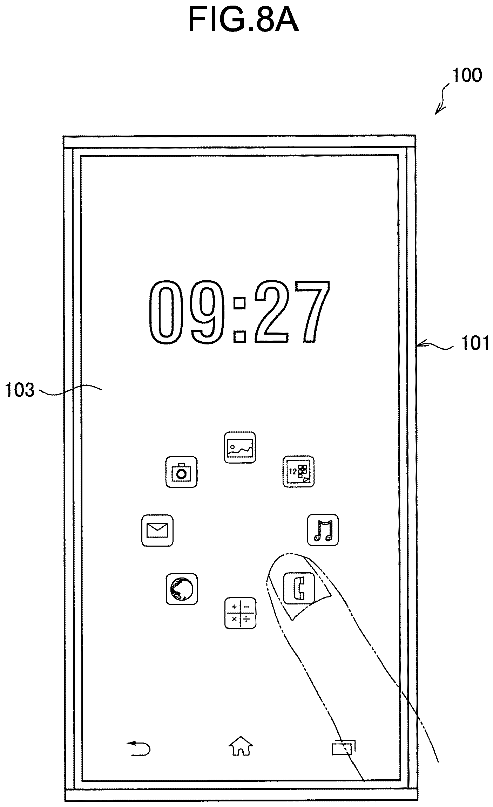

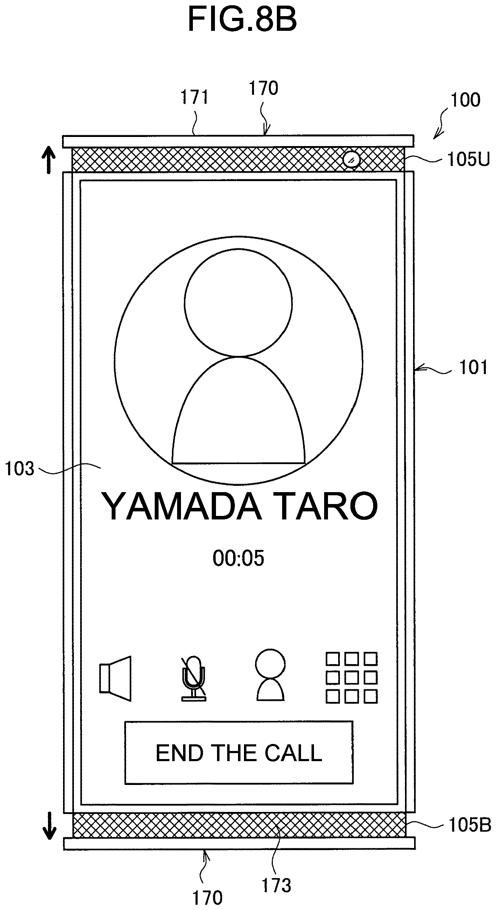

A second modification of the portable electronic device 100 according to the embodiment will now be described with reference to FIG. 8A and FIG. 8B. In the second modification, the portable electronic device 100 has a function of phone calls and has an antenna for communication mounted on the projection portion. FIG. 8A is a front view of the portable electronic device 100 according to the embodiment to illustrate a different modification thereof. FIG. 8B is a front view of the portable electronic device 100 according to the different modification to illustrate an example state of use of the portable electronic device 100.

As illustrated in FIG. 8A, the user selects the function of phone calls when he/she wants to talk over the phone using the function. More specifically, the user selects an icon on the screen 103 representing the function of phone calls.

When the user selects the function of phone calls and makes or receives a call on the portable electronic device 100, as illustrated in FIG. 8B, the top projection portion 105U and the bottom projection portion 105B project from the housing 101. The projection portion has an antenna 170. Each of the top projection portion 105U and the bottom projection portion 105B has a sub-antenna 171 and a main antenna 173. The function of phone calls of the portable electronic device 100 is implemented with the portable electronic device 100 establishing external communication using the antenna 170.

With the sub-antenna 171 and the main antenna 173 mounted on each of the top projection portion 105U and the bottom projection portion 105B, the antennas 170 are allowed to be located away from the screen 103. This structure can reduce the interference of the screen 103 with communication condition. This structure thus can improve the communication condition of the portable electronic device 100, particularly, improve the audio quality on the phone.

The projection distance of the top projection portion 105U or the bottom projection portion 105B from the housing 101 may change depending on the communication condition of the antenna 170. For example, when the communication condition is not a predetermined condition necessary for phone calls, the projection distance of the top projection portion 105U or the bottom projection portion 105B is increased until the predetermined communication condition is achieved, so that the antenna 170 can easily transmit and receive radio waves. When the communication condition is the predetermined condition necessary for phone calls, the projection distance of the top projection portion 105U or the bottom projection portion 105B is maintained, or is reduced in a range in which the predetermined communication condition is secured. That is, the projection distance of the projection portion is increased with deterioration in the communication condition of the antenna 170, whereas the projection distance is reduced with improvement in the communication condition. In this manner, the projection distance of the projection portion is optimally set to maintain the communication condition necessary for phone calls. As another example, when the communication condition is the predetermined communication condition necessary for phone calls, only one of the top projection portion 105U and the bottom projection portion 105B may project from the housing 101.

The second modification is adopted, not only to the function of phone calls, but to other communication functions of the portable electronic device 100 using the sub-antenna 171 and the main antenna 173. For example, the second modification is adopted to connection to a wireless LAN using the sub-antenna 171.

While the user is browsing a website using a function of website browsing, if the communication condition is not a predetermined communication condition necessary for website browsing, the projection distance of the projection portion is increased until the predetermined communication condition is achieved. This operation allows the antenna 170 to easily transmit and receive radio waves, and the communication condition is accordingly improved.
If the communication condition is the predetermined communication condition necessary for website browsing, the projection distance of the projection portion is maintained, or is reduced in a range in which the predetermined communication condition is secured. In this manner, the projection distance of the projection portion is optimally set to maintain the communication connection necessary for website browsing.

In the second embodiment, the projection distance of the projection portion from the housing 101 changes depending on the communication condition of the antenna 170. In addition, another type of control may be performed on the manner of projection. For example, the projection portion may be configured to slowly project from the housing 101 when the portable electronic device 100 receives an incoming call, so that the user is physically notified of the call. With the projection portion configured to project in response to an incoming call, user experience is further enhanced during use of the portable electronic device 100.

### 2. Example hardware configuration

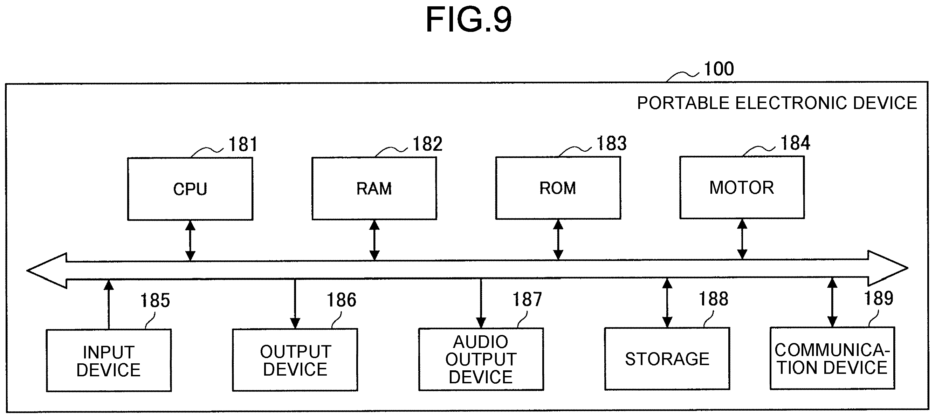

An example hardware configuration of the portable electronic device 100 according to the embodiment of the present disclosure will now be described with reference to FIG. 9. FIG. 9 is a block diagram that illustrates an example hardware configuration of the portable electronic device 100 according to the embodiment. As illustrated in FIG. 9, the portable electronic device 100 includes, for example, a CPU 181, a RAM 182, a ROM 183, a motor 184, an input device 185, a display 186, an audio output device 187, a storage 188, and a communication device 189. This hardware configuration is an example, and some components may be omitted. The hardware configuration may include components other than the components herein described.

### CPU 181, RAM 182, ROM 183

The CPU 181 serves, for example, as an arithmetic processing unit or a controller, and integrally or partially controls operation of the components based on various computer programs stored in the ROM 183, the RAM 182, or the storage 188. The ROM 183 is means to store, for example, computer programs loaded onto the CPU 181 and data used for arithmetic processing. The RAM 182 transiently or permanently stores, for example, computer programs loaded onto the CPU 181 and various parameters that change as appropriate depending on the computer program. These devices are connected with one another via a host bus including a CPU bus and others. The CPU 181, the RAM 182, and the ROM 183 can implement the functions of the controller 120 described with reference to FIG. 2, for example, using software.

### Motor 184

The motor 184 has a function as a driving source to start a driving mechanism placed in the housing 101. The motor 184 can implement the function as the driving unit 130 described with reference to FIG. 2, for example, using a shaft and gears.

### Input device 185

Examples of the input device 185 may include a touch screen, buttons, and switches. The input device 185 may be a remote controller that can transmit a control signal using infrared light and other radio waves. The input device 185 includes an audio input device such as a microphone. The input device 185 can implement, for example, the functions of the input unit 110 described with reference to FIG. 2.

### Display 186, Audio output device 187

Examples of the display 186 include a cathode ray tube (CRT) display and a liquid crystal display (LCD). Other than these, the display 186 may be various display devices such as a projector, an Organic Light Emitting Diode (OLED) display, and lamps. Examples of the audio output device 187 include a speaker and headphones.

### Storage 188

The storage 188 stores various types of data. Examples of the storage 188 include magnetic storage devices such as a hard disk drive (HDD), semiconductor memories, optical storage devices, and photomagnetic storage devices. The storage 188 implements, for example, the functions of the memory 140 described with reference to FIG. 2.

### Communication device 189

The communication device 189 is used for external communication. Examples of the communication device 189 include communication cards for a wired or wireless LAN, Bluetooth (registered trademark), and a wireless USB (WUSB), routers for fiber-optic communication, routers for Asymmetric Digital Subscriber Line (ADSL), and modems for various types of communication.

An example hardware configuration of the portable electronic device 100 according to the embodiment of the present disclosure has been described with reference to FIG. 9.

### 3. Conclusions

As described above, in the portable electronic device 100 according to the embodiment of the present disclosure, the top projection portion 105U or the bottom projection portion 105B is configured to be accommodated in the housing 101 and to project. The manner of projection of the top projection portion 105U or the bottom projection portion 105B is controlled by the controller 120. With the projection portion projecting from the housing 101 in a controlled manner of projection, the shape of the housing 101 significantly changes. This change can greatly enhance user experience during use of the portable electronic device 100.

Although a preferred embodiment of the present disclosure has been described in detail with reference to the accompanying drawings, the technical scope of the present disclosure is not limited to those examples. It is obvious that the skilled person who has ordinary knowledge in the technical field of the present disclosure could conceive of various changes and modifications within the scope of the technical thought described in the appended claims. It should be understood that such changes and modifications are certainly within the technical scope of the present disclosure.

The functions of the portable electronic device 100 according to the embodiment and the modifications may be associated with the manners of projection of the projection portion. For example, the portable electronic device 100 has the functions of establishing external communication, playing video or music, and imaging. For these functions, the top projection portion 105U and the bottom projection portion 105B have the speakers 150, the cameras 160, and the antennas 170. The controller 120 controls the manner of projection of the projection portions, as described above, in association with the functions of the portable electronic device 100.

The portable electronic device 100 according to the embodiment may have functions other than establishing external communication, playing video or music, and imaging. For example, the portable electronic device 100 may have a gaming function. In this case, the projection portion of the portable electronic device 100 is used as one of elements to enhance the dramatic effects of the game. Specifically, the projection distance of the projection portion from the housing 101 changes with a change in what is displayed (such as a move of a character and a gauge) on the gaming screen. Such a move of the projection portion during a game can enhance user experience in the use of the portable electronic device 100.

In the portable electronic device 100 according to the embodiment, the manner of projection of the projection portion may be set by a user depending on the functions. The user sets the manner of projection, on the function setting screen of the portable electronic device 100, for example, such that either the top projection portion 105U or the bottom projection portion 105B projects, or that both the top projection portion 105U and the bottom projection portion 105B project, or that neither the top projection portion 105U nor the bottom projection portion 105B projects. The user is further allowed to set, for example, the projection distance from the housing 101 and the angle of the projection portion, already in the state of projection, with respect to the housing 101, on the function setting screen. The user selects a desired manner of projection for various functions, such as establishing external communication, playing video or music, and imaging. This method can further enhance user experience.

A series of processing performed by the devices described in this specification can be implemented by using software, hardware, or a combination of software and hardware. Computer programs of the software are previously stored, for example, in a memory medium (a non-transitory media) installed inside or outside the devices. The computer programs are loaded onto a RAM when executed by a computer and executed by a processor such as a CPU.

The processing described in this specification using the flowchart is not necessarily performed in the order indicated in the drawing. Some of the processing steps may be performed in parallel. Supplementary processing steps may be included, or some of the processing steps may be excluded.

The effects described in this specification are illustrative and examples only, and are not restrictive. Technologies according to the present disclosure can exert various effects, in addition to the above effects or instead of the above effects, that are apparent to the skilled person from the description in this specification.

### Reference Signs List

- 100: PORTABLE ELECTRONIC DEVICE
- 101: HOUSING
- 101a: TOP END SURFACE
- 101b: BOTTOM END SURFACE
- 103: SCREEN
- 103a: EDGE CLOSER TO TOP END SURFACE
- 103b: EDGE CLOSER TO BOTTOM END SURFACE
- 105U: TOP PROJECTION PORTION
- 105B: BOTTOM PROJECTION PORTION
- 120: CONTROLLER
- 150: SPEAKER
- 151: SPEAKER BOX
- 160: CAMERA
- 170: ANTENNA

## Claims

1. A portable electronic device (100), comprising:
a housing (101);
a first projection portion (101a) configured to be accommodated in the housing and to project from a first end surface of the housing;
a second projection portion (101b) configured to be accommodated in the housing and to project from a second end surface of the housing; and
a controller (120) configured to: control a manner of projection of the first projection portion and the second projection portion, wherein the manner of projection is one of i) the distance by which the first and second projection portion projects from the housing, ii) the speed at which the first and second projection portion projects from the housing or iii) the angle of projection with respect to the housing (101), of the first and second projection portions when already in a state of projection from the housing (101) ;
determine a state of use of the portable electronic device, and
control the manner of projection of the first projection portion and the second projection portion, based on a result of the determination.

2. The portable electronic device according to claim 1, wherein
a screen is mounted on at least one of surfaces of the housing, and
a distance by which the first projection portion projects from the housing is equal to or greater than a distance from an outer edge of the first end surface of the housing to an edge, of the screen, closer to the first end surface.

3. The portable electronic device according to claim 1, wherein
a screen is mounted on at least one of surfaces of the housing, and
a distance by which the second projection portion projects from the housing is equal to or greater than a distance from an outer edge of the second end surface of the housing to an edge, of the screen, closer to the second end surface.

4. The portable electronic device according to claim 1, wherein the first projection portion and the second projection portion are configured to project in directions opposite to each other.

5. The portable electronic device according to claim 1, wherein the first projection portion and the second projection portion have speakers.

6. The portable electronic device according to claim 5, wherein the speakers mounted on the first projection portion and the second projection portion are open in a same direction.

7. The portable electronic device according to claim 5, wherein
a screen is mounted on at least one of surfaces of the housing, and
the controller controls a distance from the housing to the speaker mounted on the first projection portion or the second projection portion, depending on what is displayed on the screen.

8. The portable electronic device according to claim 5, wherein each of the speakers has a speaker box.

9. The portable electronic device according to claim 1, wherein the first projection portion or the second projection portion has an antenna.

10. The portable electronic device according to claim 1, wherein the first projection portion or the second projection portion has a camera.

11. The portable electronic device according to claim 1, wherein
the housing is a flat and substantially rectangular cuboid, and
the first end surface and the second end surface correspond to an end surface and another end surface, respectively, of the housing in a longitudinal direction.

12. The portable electronic device according to claim 11, wherein the first projection portion and the second projection portion have a same width as a width of the housing.

## Patentansprüche

1. Tragbare elektronische Vorrichtung (100), umfassend:
ein Gehäuse (101);
einen ersten Vorsprungsabschnitt (101a), der so konfiguriert ist, dass er im Gehäuse untergebracht ist und von einer ersten Endoberfläche des Gehäuses vorsteht;
einen zweiten Vorsprungsabschnitt (101b), der so konfiguriert ist, dass er im Gehäuse untergebracht ist und von einer zweiten Endoberfläche des Gehäuses vorsteht; und
eine Steuerung (120), die konfiguriert ist zur: Steuerung einer Art des Vorsprungs des ersten Vorsprungsabschnitts und des zweiten Vorsprungsabschnitts, wobei die Art des Vorsprungs entweder i) die Entfernung, um die der erste und der zweite Vorsprungsabschnitt vom Gehäuse vorstehen, ii) die Geschwindigkeit, mit welcher der erste und der zweite Vorsprungsabschnitt vom Gehäuse vorstehen, oder iii) der Vorsprungswinkel in Bezug auf das Gehäuse (101) des ersten und des zweiten Vorsprungsabschnitts, wenn sie sich bereits in einem Zustand des Vorsprungs vom Gehäuse (101) befinden, ist;
Bestimmung eines Verwendungszustands der tragbaren elektronischen Vorrichtung und
Steuerung der Art des Vorsprungs des ersten Vorsprungsabschnitts und des zweiten Vorsprungsabschnitts basierend auf einem Ergebnis der Bestimmung.

2. Tragbare elektronische Vorrichtung nach Anspruch 1, wobei
ein Bildschirm auf mindestens einer der Oberflächen des Gehäuses angebracht ist und
eine Entfernung, um die der erste Vorsprungsabschnitt vom Gehäuse vorsteht, gleich oder größer einer Entfernung von einer Außenkante der ersten Endoberfläche des Gehäuses zu einer Kante des Bildschirms, die näher an der ersten Endoberfläche liegt, ist.

3. Tragbare elektronische Vorrichtung nach Anspruch 1, wobei
ein Bildschirm auf mindestens einer der Oberflächen des Gehäuses angebracht ist und
eine Entfernung, um die der zweite Vorsprungsabschnitt vom Gehäuse vorsteht, gleich oder größer einer Entfernung von einer Außenkante der zweiten Endoberfläche des Gehäuses zu einer Kante des Bildschirms, die näher an der zweiten Endoberfläche liegt, ist.

4. Tragbare elektronische Vorrichtung nach Anspruch 1, wobei der erste Vorsprungsabschnitt und der zweite Vorsprungsabschnitt so konfiguriert sind, dass sie in zueinander entgegengesetzte Richtungen vorstehen.

5. Tragbare elektronische Vorrichtung nach Anspruch 1, wobei der erste Vorsprungsabschnitt und der zweite Vorsprungsabschnitt Lautsprecher aufweisen.

6. Tragbare elektronische Vorrichtung nach Anspruch 5, wobei die Lautsprecher, die am ersten Vorsprungsabschnitt und am zweiten Vorsprungsabschnitt angebracht sind, in dieselbe Richtung offen sind.

7. Tragbare elektronische Vorrichtung nach Anspruch 5, wobei
ein Bildschirm auf mindestens einer der Oberflächen des Gehäuses angebracht ist und
die Steuerung eine Entfernung vom Gehäuse zum Lautsprecher, der am ersten Vorsprungsabschnitt oder am zweiten Vorsprungsabschnitt angebracht ist, steuert, je nachdem, was auf dem Bildschirm angezeigt wird.

8. Tragbare elektronische Vorrichtung nach Anspruch 5, wobei jeder der Lautsprecher eine Lautsprecherbox aufweist.

9. Tragbare elektronische Vorrichtung nach Anspruch 1, wobei der erste Vorsprungsabschnitt oder der zweite Vorsprungsabschnitt eine Antenne aufweist.

10. Tragbare elektronische Vorrichtung nach Anspruch 1, wobei der erste Vorsprungsabschnitt oder der zweite Vorsprungsabschnitt eine Kamera aufweist.

11. Tragbare elektronische Vorrichtung nach Anspruch 1, wobei
das Gehäuse ein flacher und im Wesentlichen rechteckiger Quader ist und
die erste Endoberfläche und die zweite Endoberfläche einer Endoberfläche bzw. einer anderen Endoberfläche des Gehäuses in einer Längsrichtung entsprechen.

12. Tragbare elektronische Vorrichtung nach Anspruch 11, wobei der erste Vorsprungsabschnitt und der zweite Vorsprungsabschnitt die gleiche Breite wie eine Breite des Gehäuses aufweisen.

## Revendications

1. Dispositif électronique portable (100) comprenant :
un boîtier (101) ;
une première partie de saillie (101a) conçue pour être logée dans le boîtier et pour faire saillie à partir d'une première surface d'extrémité du boîtier ;
une seconde partie saillante (101b) conçue pour être logée dans le boîtier et pour faire saillie à partir d'une seconde surface d'extrémité du boîtier ; et
un dispositif de commande (120) configuré pour : commander un mode de saillie de la première et de la seconde partie de saillie, dans lequel le mode de saillie est l'un parmi : i) la distance à laquelle la première et la seconde partie de saillie font saillie par rapport au boîtier, ii) la vitesse à laquelle la première et la seconde partie de saillie font saillie par rapport au boîtier ou iii) l'angle de saillie, par rapport au boîtier (101), de la première et de la seconde partie de saillie lorsqu'elles sont déjà dans un état de saillie par rapport au boîtier (101) ;
déterminer un état d'utilisation de l'appareil électronique portable, et
commander le mode de saillie de la première et de la seconde partie de saillie, en fonction du résultat de la détermination.

2. Dispositif électronique portable selon la revendication 1, dans lequel
un écran est monté sur au moins l'une des surfaces du boîtier, et
la distance à laquelle la première partie de saillie dépasse du boîtier est égale ou supérieure à la distance entre un bord extérieur de la première surface d'extrémité du boîtier et un bord de l'écran plus proche de la première surface d'extrémité.

3. Dispositif électronique portable selon la revendication 1, dans lequel
un écran est monté sur au moins l'une des surfaces du boîtier, et
la distance à laquelle la seconde partie de saillie fait saillie du boîtier est égale ou supérieure à la distance entre un bord extérieur de la seconde surface d'extrémité du boîtier et un bord de l'écran plus proche de la seconde surface d'extrémité.

4. Appareil électronique portable selon la revendication 1, dans lequel la première partie de saillie et la seconde partie de saillie sont conçues pour faire saillie dans des directions opposées l'une à l'autre.

5. Appareil électronique portable selon la revendication 1, dans lequel la première partie de saillie et la seconde partie de saillie sont équipées de haut-parleurs.

6. Appareil électronique portable selon la revendication 5, dans lequel les haut-parleurs montés sur la première partie de saillie et la seconde partie de saillie sont ouvertes dans la même direction.

7. Dispositif électronique portable selon la revendication 5, dans lequel
un écran est monté sur au moins l'une des surfaces du boîtier, et
le dispositif de commande commande une distance entre le boîtier et le haut-parleur monté sur la première ou la seconde partie de saillie, en fonction de ce qui est affiché sur l'écran.

8. Appareil électronique portable selon la revendication 5, dans lequel chacun des haut-parleurs est doté d'un boîtier de haut-parleur.

9. Appareil électronique portable selon la revendication 1, dans lequel la première ou la seconde partie de saillie présente une antenne.

10. Appareil électronique portable selon la revendication 1, dans lequel la première partie de saillie ou la seconde partie de saillie est équipée d'une caméra.

11. Dispositif électronique portable selon la revendication 1, dans lequel
le boîtier est un parallélépipède plat et sensiblement rectangulaire, et
la première surface d'extrémité et la seconde surface d'extrémité correspondent respectivement à une surface d'extrémité et à une autre surface d'extrémité du boîtier dans une direction longitudinale.

12. Appareil électronique portable selon la revendication 11, dans lequel la première partie de saillie et la seconde partie de saillie ont la même largeur que la largeur du boîtier.
